# EUROPÄISCHE PATENTSCHRIFT

(11) **EP 0 730 705 B1**
(45) Veröffentlichungstag und Bekanntmachung des Hinweises auf die Patenterteilung: **07.07.1999**
(21) Anmeldenummer: 94929473.0
(22) Anmeldetag: 14.10.1994
(51) Int. Cl.: F01L 1/04, F16H 53/02

(54) **VERFAHREN ZUR HERSTELLUNG EINER EINSTÜCKIGEN HOHLEN NOCKENWELLE**
PROCESS FOR PRODUCING A ONE-PIECE HOLLOW CAMSHAFT
PROCEDE DE FABRICATION D'UN ARBRE A CAMES CREUX EN UNE SEULE PIECE

(30) Priorität: 26.11.1993 DE 4340399; 01.08.1994 DE 4427201
(43) Veröffentlichungstag der Anmeldung: 11.09.1996
(73) Patentinhaber: Gesellschaft für Innenhochdruckverfahren mbH & Co.KG, D-73431 Aalen (DE)
(72) Erfinder: KLAAS, Friedrich, D-73432 Aalen (DE); BÖGEL, Helmut, D-73431 Aalen (DE)
(74) Vertreter: R.A. KUHNEN & P.A. WACKER
(86) Internationale Anmeldenummer: DE9401218
(87) Internationale Veröffentlichungsnummer: WO9514851

(56) Entgegenhaltungen:
- DE-A- 2 950 275
- DE-A- 3 736 453
- US-A- 3 845 667

## Beschreibung

Die Erfindung betrifft ein Verfahren zur Herstellung von hohlen Nockenwellen nach den Oberbegriffen der Ansprüche 1 und 9.

Insbesondere betrifft die Erfindung Verfahren, die Vorformen beim Innenhochdruck-Umformen zur Ausgestaltung vollständiger hohler Wellen aus Rohrabschnitten einsetzen, wobei hier unter Rohrabschnitten beliebige langgestreckte Hohlkörper verstanden werden, also auch Vierkantrohre, Sechskantrohre oder andere Hohlprofile.

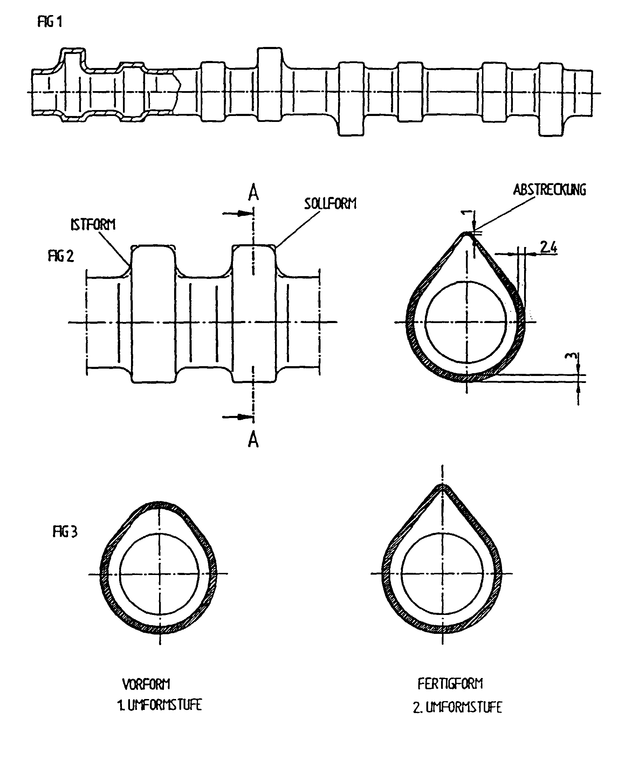

Gegenüber massiven Hohlwellen bieten hohle Nockenwellen, wie sie schematisch in Fig. 1 dargestellt sind, einen Gewichtsvorteil von bis zu 75% gegenüber Vollmaterialwellen. Im Vergleich dazu bieten gebaute Nockenwellen, wie sie z.B aus der DE-C-37 04 092, der EP 278292, der EP 278292, der DE-C-3428372 oder auch der EP 290758 oder EP 303845 bekannt geworden sind, nur einen Gewichtsvorteil von 40% gegenüber Vollwellen. Zudem sind gebaute Nockenwellen nach wie vor vergleichsweise teuer in der Herstellung, da getrennt Nocken und Hohlrohre vorgehalten werden müssen und dann in geeigneter Weise gemeinsam in eine Form eingelegt werden müssen. Es müssen also aufwendig Einzelkomponenten auf Lager gehalten und zusammengesetzt werden.

Aus diesem Grunde werden bisher hohle Nockenwellen, obwohl ihre gebaute Form theoretisch und auch in Schutzrechtsanmeldungen beschrieben ist, noch nicht in Kraftfahrzeugen eingesetzt.

Die Ursache hierfür ist in einer geeigneten Verfahrenstechnik zur Herstellung dieser Wellen zu sehen. Vorschläge zur Herstellung gebauter hohler Nockenwellen sind bspw. in der DE-C-19 10 517 aufgeführt. Diese Verfahrenstechniken sind jedoch für die Herstellung hohler Nockenwellen aus Rohrabschnitten vollkommen ungeeignet. Die erforderlichen Umformgrade können weder mit elektromagetischen noch mit elektrohydraulischem Umformen wirtschaftlich erreicht werden. Das Rundhämmern bzw. Rundkneten, wie es in der DE-C-37 36 453 beschrieben ist, hat bisher auch noch nicht zum Ziel geführt. Diese Art der Herstellung hohler Nockenwellen scheitert insbesondere an der einseitigen Massenverteilung in den Nocken. Auch das einstufige Innenhochdruckumformen mit einem Werkzeug entsprechend der US-C-2,892,254 führt nicht zum Ziel. Obwohl bei dieser Vorgehensweise axiales Nachschieben von Werkstoff vorgesehen ist, wird die Formausfüllung an den Nockenspitzen nicht erreicht, ebenso ergibt sich eine erhebliche Wandabstreckung auf den Nocken. Fig. 2 zeigt die unerwünschte Wandabstreckung an einer Nocke, die mit dem bekannten einstufigen Innenhochdruckumformverfahren hergestellt wurde.

Unter Innenhochdruckverfahren oder auch IHV-Verfahren wird hier das Verfahren verstanden, das beispielsweise im Industrieanzeiger Nr. 20 vom 9.3.1984 beschrieben worden ist oder auch in "Metallumformtechnik", Ausgabe 1D/91, Seite 15 ff: A. Ebbinghaus: "Präzisionswerkstücke in Leichtbauweise, hergestellt durch Innenhochdruckumformen" oder auch Werkstoff und Betrieb 123 (1990), 3, Seite 241 bis 243: A. Ebbinghaus: "Wirtschaftliches Konstruieren mit innenhochdruckumgeformten Präzisionswerkstükken" oder auch "Werkstoff und Betrieb 122, (1991), 11, (1989), Seite 933 bis 938. Nachfolgend wird zur Vermeidung von Wiederholungen auf deren Offenbarung in vollem Umfang Bezug genommen.

Dieses Verfahren wurde bisher bspw. für die Herstellung von Flanschen, wie es in der EP-2395052 beschrieben ist, bzw. zur Herstellung von gebauten Nockenwellen zur Befestigung von Nocken an einem Rohr zur Herstellung von hohlen Nockenwellen eingesetzt.

Es ist demgegenüber Aufgabe der Erfindung, ein Verfahren zu wirtschaftlichen Herstellung von hohlen Nockenwellen anzugeben.

Die Aufgabe wird durch ein Verfahren mit den Merkmalen des Anspruchs 1 bzw. 9 gelöst. Damit wird eine Nockenwelle geschaffen, die einstückig aus einem kaltumformbaren, wärmebehandelbaren Metall oder Kunststoff besteht und einen zu den Außenkonturen der Nockenwelle parallelen Faserverlauf aufweist.

Bevorzugt kann als Material dafür ein kohlenstoffhaltiger Stahl eingesetzt werden, der ausreichend dehnungsfähig, aber zum Härten auch wärmebehandelbar ist.

Geeignete Materialien können sein: 19MnB4, 16MnCr5, CK45, 19CrMo44, 15Cr3, C25 Stahl, X3NiCoMoTi18 9 5, β-C-Titanlegierungen und solche, die ein ähnliches Verhalten aufweisen.

Dabei schafft die Erfindung ein Verfahren zur Herstellung von hohlen Wellen unter Verwendung des Innenhochdruck-Umformens von Hohlrohren, mit nachfolgenden Schritten:
- Vorlegen eines Rohrausgangsteils und Füllen desselben mit Fluid;
- Abdichten zumindest des aufzuweitenden Rohrabschnitts;
- Aufbringen eines zum Aufweiten des Rohrabschnitts geeigneten Innenhochdrucks zur Herstellung einer Zwischenprodukt-Vorform, wobei das Hohlrohr in Richtung seiner Längsachse während des Aufbringens des Innenhochdrucks gegen eine bewegbare Form derart gestaucht wird, daß Materialanhäufungen in etwa an den Stellen entstehen, an denen Nocken entstehen sollen;
- Umformen der Zwischenprodukt-Vorform in einer der endgültigen Nockenwellenform entsprechenden Form mittels des Innenhochdruckumformverfahrens, so daß Nocken an den erwünschten Stellen ausgeformt werden; ggf. Nacharbeiten der Nocken durch Wärmebehandlung od.dgl.

Vorteilhafte Weiterbildungen ergeben sich aus den Unteransprüchen.

Es wird erfindungsgemäß also ein über das bekannte Innenhochdruckumform-Verfahren hinausgehend (s. Tagungsband des 14. Umformtechnischen Kolloquiums in Hannover 1993, auf dessen Offenbarung in vollem Umfang bezug genommen wird) ein spezielles zweistufiges Umform-Verfahren für Nockenwellen konzipiert, mittels dessen sich preiswert hohle Nockenwellen herstellen lassen. Dabei bieten Formgenauigkeit und geringe Wandabstreckung an den Nockenspitzen aus technologischer Sicht die Hauptanforderungen an ein entsprechendes Innenhochdruckumformverfahren.

In überraschender Weise ist es möglich, Nockenwellen mit im wesentlichen konstanter Wandstärke herzustellen.

Nachfolgend wird die Erfindung anhand der beigefügten Zeichnung sowie der nachfolgenden Beschreibung näher erläutert. Dabei zeigt:
- Fig. 1: eine schematische Darstellung einer erfindungsgemäßen, in zwei Umformschritten hergestellten Nockenwelle;
- Fig. 2: eine schematische Darstellung einer in einem einzigen Umformschritt hergestellten Nockenwelle;
- Fig. 2a: einen Schnitt entlang der Linie A-A der Fig. 2;
- Fig. 3: einen Schnitt durch den Nocken einer erfindungsgemäß hergestellten Vorform;
- Fig. 3a: einen Schnitt durch die Endform des Nockens, der aus der Vorform der Fig. 3 entstand;
- Fig. 4: eine Vorform einer ersten Umformstufe für Nocken im Quer- und Längsschnitt;
- Fig. 5: eine weitere Vorform einer ersten Umformstufe für Nokken im Quer- und Längsschnitt;
- Fig. 6: eine weitere Vorform einer ersten Umformstufe für Nokken im Quer- und Längssschnitt;
- Fig. 7: die Nocken-Endform, die aus den in Fig. 4-6 dargestellten Vorformen hergestellt ist; und
- Fig. 8: eine Darstellung des Faserverlaufs in einem Teilabschnitt einer Fotografie einer erfindungsgemäßen Welle, längs geschnitten.

Eine erfindungsgemäße Nockenwelle zeichnet sich dadurch aus, daß sie - im Gegensatz zu den bisherigen gebauten hohlen Nockenwellen - keine aufgesetzten Nocken mehr besitzt, sondern aus einem einzigen Ausgangsrohr ohne weitere Einzelteile in mehreren Umformstufen hergestellt ist. Dadurch wird ein äußerst günstiger, zu den Außenkonturen der Welle paralleler Faserverlauf erzielt, der zu einer hohen Festigkeit der Welle und damit zu einem geringen Gewicht führt. Gleichzeitig kann, sofern erwünscht, eine im wesentlichen konstante Wandstärke von beispielsweise 2mm bis 5mm eingestellt werden, die eine Toleranz von nur etwa 0,5mm aufweist. Eine erfindungsgemäße Welle ist schematisch in Fig. 1 dargestellt.

Es treten keine Probleme mit möglicher Ablösung der Nocken von einem Zentralrohr auf. Es ist wichtig, daß ein Material verwendet wird, das eine ausreichende Kaltverformbarkeit bei gleichzeitiger Härte oder Härtungsmöglichkeit aufweist, um verschleißfeste Nocken zu bilden.

Dieses kann bspw. ein geeigneter kohlenstoffhaltiger Stahl sein, der wärmebehandelbar ist, aber auch ausreichend dehnungsfähig, um eine derartig aufwendige Umformung ohne Reißen durchzustehen. Selbstverständlich können andere leichte und/oder feste Materialien je nach Einsatzzweck der Welle in stationären Motoren, Flugzeugmotoren, Schiffsmotoren oder Landfahrzeugen, wie Aluminiumlegierungen, Titanlegierungen und andere Materialien, wie sie dem Fachmann geläufig sind, eingesetzt werden, wie 19MnB4, 16MnCr5, CK45, 19CrMo44, 15Cr3, C25 Stahl, X3NiCoMoTil8 9 5, β-C-Titanlegierungen und solche, die ein ähnliches Verhalten aufweisen. Je nach Einsatzzweck kann ein teures, leichtes Material verwendet werden - dies bietet sich bspw. für den Flugzeugmotorbau an - oder auch ein schwereres Material, falls das Gewicht, wie bspw. bei Schiffsmotoren - keine wesentliche Komponente darstellt.

Das erfindungsgemäße Verfahren führt bevorzugt eine mindestens zweistufige Umformung mit Vorform und Fertigform durch, wobei der Vorform in der ersten Umformstufe besondere Bedeutung zukommt. Damit Formgenauigkeit und geringe Wandabstreckung bei der Fertigform in der zweiten Umformstufe gewährleistet sind, muß in der Vorform eine günstige Massenvorverteilung in der Nockenwand vorgenommen werden. Die Massenverteilung kann in jedem Fall nur erreicht werden, wenn an jeder Nocke der Stoff beidseitig axial nachgeschoben wird. Das axiale Nachschieben an jedem Nocken geschieht durch an sich bekannte Werkzeugtechnik.

In Fig. 2 ist ein Schnitt durch eine in einem einzigen Umformschritt ausgeformte hohle Nockenwelle gezeigt, wobei sich insbesondere aus Fig. 1a, dem Querschnitt durch den Nocken, ergibt, daß die Abstreckung des Metalls beim einstufigen Verfahren zu hoch ist und erhebliche Wanddickenunterschiede, nämlich eine Wandstärke von ca. 1,0 mm an der Nockenspitze und von 3,0 mm an der der Nockenspitze gegenüberliegenden Rohrwand, auftreten. Dadurch ist die Festigkeit nicht gewährleistet.

In Fig. 3 wird demgegenüber ein Nocken, wie er beim erfindungsgemäßen Verfahren als Teil der Vorform hergestellt wird, gezeigt. Dadurch, daß zunächst ein Nocken in der Vorform hergestellt wird, der breiter, bevorzugt etwa 10 bis 40 % breiter und besonders bevorzugt etwa 20 bis 30 % breiter als die Endform und auch runder als die Endform ist, kann eine ausreichende Materialansammlung an der kritischen Nockenstelle, bei der die maximale Materialabstreckung erfolgt, hergestellt werden. Diese Materialanhäufung kann dann in einem zweiten Umformschritt - bspw. durch ein Innenhochdruckumformverfahren - es können aber auch andere Formverfahren, falls erwünscht, eingesetzt werden, wie Rundhämmern od. dgl. - zur Fertigform umgeformt. Es zeigt sich, daß durch zwei Umformschritte die erwünschte Materialanhäufung unter dem Nocken erzielt werden kann.

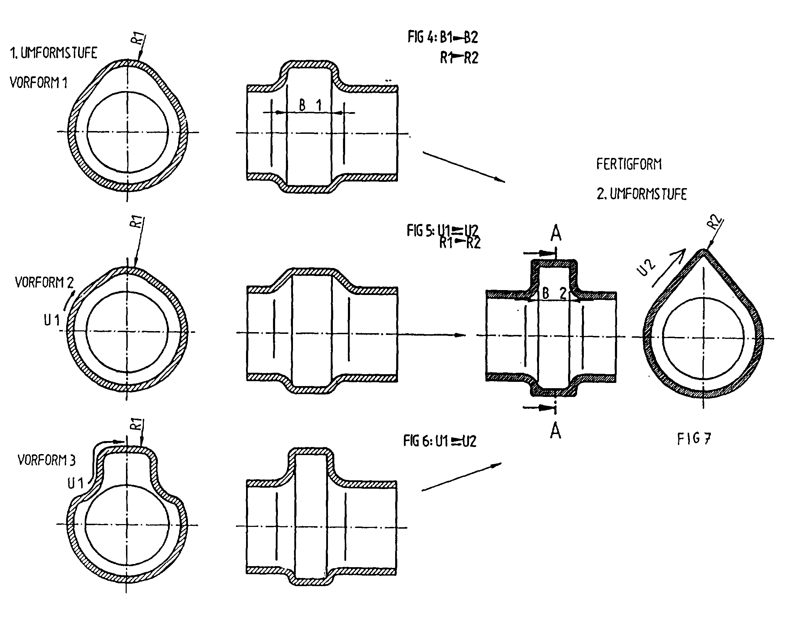

In Fig. 4 z.B. weist die Nockenvorform runde Nockenspitzen R1 auf, um unnötige Materialabstreckung zu vermeiden. Die Nockenvorform-Breite B1 ist um 10 bis 40 %. bevorzugt 20 bis 30 % breiter als die Fertigformbreite B2. Beim Umformen der Fertigform wird in der zweiten Umformstufe die runde und bereite Vorform axial gestaucht. Dieser Stauchprozeß verhindert die übermäßige Abstreckung der Rohrwand und erzwingt eine hohe Formgenauigkeit, die ein späteres Nacharbeiten vermeidet.

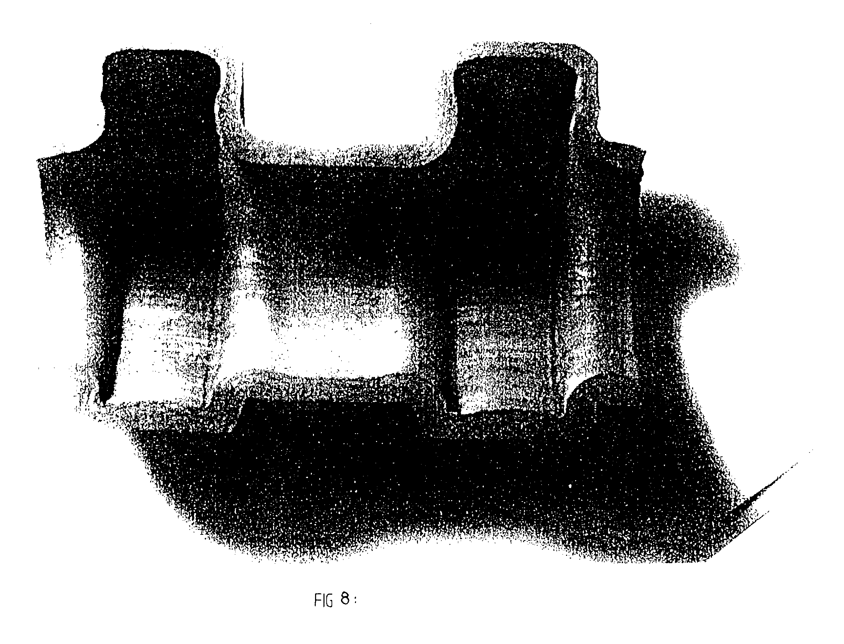

Die Fig. 5 und 6 zeigen andere mögliche Vorform-Varianten für die erste Umformstufe mit gezielt vergrößertem Umfang U1 der Nocken in der Vorform, der etwa 5 bis 20 % größer, bevorzugt um 10 % größer als die Fertigform ist. In diesem Fall fließt das Material beim Herstellen der Fertigform in Umfangsrichtung U2 in die Nockenspitze. Dabei ist auf die Form der Fig. 6 hinzuweisen, die eine teilkollabierte Nockenvorform zeigt, die sodann in einem nachfolgenden Umformschritt endgültig zu einem Nocken geformt wird.

In Fig. 7 ist sodann die fertige Nockenendform dargestellt, wie sie aus jeder der Vorformen der Fig. 4 bis 6 herstellbar ist. Dort beträgt bei einer Ausführungsform - auf die die Erfindung keineswegs beschränkt ist, - typischerweise die Nockenhöhe außen 50 mm von Nockenspitze bis Nockenbasis; der Rohrteil besitzt einen Durchmesser von 30 mm und eine Wanddicke von etwa 3 mm, die Nockenspitze besitzt eine Wandstärke von 2 bis 3 mm und die Nockenbasis eine Wanddicke von bis zu 5 mm, da dort eine größere Materialanhäufung stattfindet. Selbstverständlich sind die in diesen Figuren dargestellten Nockenvor- und endformen keineswegs einschränkend - nach diesem Prinzip können auch Lagerringe u. dgl. auf der Nockenwelle ausgebildet werden, falls notwendig.

Fig. 8 ist eine fotografische Darstellung des Faserverlaufs in einem Teilabschnitt einer erfindungsgemäßen Nockenwelle, aus dem sich ersehen läßt, daß die Fasern parallel zu den Wänden der Nockenwelle verlaufen.

Abschließend soll noch die Möglichkeit der Kombination von Innenhochdruckumform- und anderen Umformverfahren erwähnt werden, z.B. läßt sich eine geeignete Vorform durch Innenhochdruckumformen herstellen und anschließend durch Rundhämmern oder andere geeignete Verfahren, die dem Fachmann geläufig sind, fertigstellen.

Die Welle kann nach dem IHV-Verfahren in bekannter Weise weiterbehandelt, bspw. gehärtet, werden. Dafür bieten sich die bekannten Verfahren, wie Nacharbeiten der Welle durch ein oder mehrere Nachbehandlungsverfahren, ausgewählt aus der Gruppe bestehend aus Nitrocarburieren, Plasmanitrieren, Borieren, Laserhärten, Härten ohne Aufkohlen, Induktionshärten, Flammhärten, Elektronenstrahlhärten, Einsatzhärten, an.

Es soll daraufhingewiesen werden, daß die erfindungsgemäßen Wellen mit den verschiedensten Nockenwinkeln, Wanddicken, Wanddikkenverhältnissen durch das IHV-Verfahren hergestellt werden können und keineswegs auf irgendeine beschriebene Ausführungsform begrenzt sind.

## Patentansprüche

1. Verfahren zum Herstellen von hohlen Nockenwellen aus einem kaltumformbaren, wärmebehandelbaren Metall oder einer Metallegierung oder Kunststoff, mit einem zu den Außenkonturen der Nockenwelle parallelen Faserverlauf, mit den folgenden Schritten:
[a] Bereitstellen eines Rohrausgangsteils und Füllen desselben mit Fluid;
[b] Abdichten zumindest des aufzuweitenden Rohrabschnitts;
[c] Aufbringen eines zum Aufweiten des Rohrabschnitts geeigneten Innenhochdrucks bei gleichzeitigem Stauchen des Rohrausgangsteils in seiner Längsachse, so daß in etwa an den Stellen, an denen Nocken entstehen sollen, Materialanhäufungen entstehen;
dadurch gekennzeichnet, daß das so ausgebildete Zwischenprodukt durch den Schritt weitergebildet wird:
[d] Umformen des Zwischenprodukts in eine der endgültigen Nockenwellenform entsprechenden Form durch einen weiteren Innenhochdruckumformschritt.

2. Verfahren nach Anspruch 1, dadurch gekennzeichnet, daß die Wanddicke des Rohrausgangsteils zwischen etwa 2 bis 5 mm, vorzugsweise etwa 2,5 bis 4 mm beträgt.

3. Verfahren nach Anspruch 1 oder 2, dadurch gekennzeichnet, daß bei der Zwischenform die Nocken-Vorform breiter als der fertige Nocken ist.

4. Verfahren nach Anspruch 3, dadurch gekennzeichnet, daß die Breite der Nocken-Vorform zwischen 10% bis 40%, insbesondere zwischen 20% bis 30% breiter als die Endform der Nocken der endgültigen Nockenwelle ist.

5. Verfahren nach Anspruch 1 oder 2, dadurch gekennzeichnet, daß bei der Zwischenform die Nocken-Vorform einen größeren Umfang als der fertige Nocken aufweist.

6. Verfahren nach Anspruch 5, dadurch gekennzeichnet, daß der vorbestimmte Umfang der Nocken-Vorformen zwischen 5% bis 20%, insbesondere 10% größer als der endgültige Umfang ist.

7. Verfahren nach einem der Ansprüche 3 bis 6, dadurch gekennzeichnet, daß die Nocken-Vorform relativ abgerundete Nockenspitzen aufweist und das Verfahren weiterhin einen Schritt eines Umformens der relativ abgerundeten Nockenspitzen in spitzere Nockenspitzen aufweist.

8. Verfahren nach einem der Ansprüche 1 bis 7, dadurch gekennzeichnet, daß das Nachbearbeiten der Nockenwelle durch ein oder mehrere Nachbehandlungsverfahren, ausgewählt aus der Gruppe bestehend aus Nitrocarburieren, Plasmanitrieren, Borieren, Läserhärten, Härten ohne Aufkohlen, Induktionshärten, Flammhärten, Elektronenstrahlhärten, Einsatzhärten, erfolgt.

9. Verfahren zum Herstellen von hohlen Nockenwellen aus einem kaltumformbaren, wärmebehandelbaren Metall oder einer Metallegierung oder Kunststoff, mit einem zu den Außenkonturen der Nockenwelle parallelen Faserverlauf, mit den Schritten:
[a] Bereitstellen eines Rohrausgangsteils und Füllen desselben mit Fluid;
[b] Abdichten zumindest des aufzuweitenden Rohrabschnitts;
[c] Aufbringen eines zum Aufweiten des Rohrabschnitts geeigneten Innenhochdrucks bei gleichzeitigem Stauchen des Rohrausgangsteils in seiner Längsachse, so daß in etwa an den Stellen, an denen Nocken entstehen sollen, Materialanhäufungen entstehen;
dadurch gekennzeichnet, daß das so ausgebildete Zwischenprodukt durch den Schritt weitergebildet wird:
[d] ein zweites Umformen der so hergestellten Zwischenprodukt-Vorform in eine der endgültigen Nockenwelle entsprechenden Form, mittels Rundhämmem oder einem anderen geeigneten Verfahren.

10. Verfahren nach Anspruch 9, dadurch gekennzeichnet, daß die Wanddicke des Rohrausgangsteils zwischen etwa 2 bis 5 mm, vorzugsweise etwa 2,5 bis 4 mm beträgt.

11. Verfahren nach Anspruch 9 oder 10, dadurch gekennzeichnet, daß bei der Zwischenform die Nocken-Vorform breiter als der fertige Nocken ist.

12. Verfahren nach Anspruch 11, dadurch gekennzeichnet, daß die Breite der Nocken-Vorform zwischen 10% bis 40%, insbesondere zwischen 20% bis 30% breiter als die Endform der Nocken der endgültigen Nockenwelle ist.

13. Verfahren nach Anspruch 9 oder 10, dadurch gekennzeichnet, daß bei der Zwischenform die Nocken-Vorform einen größeren Umfang als der fertige Nocken aufweist.

14. Verfahren nach Anspruch 13, dadurch gekennzeichnet, daß der vorbestimmte Umfang der Nocken-Vorformen zwischen 5% bis 20%, insbesondere 10% größer als der endgültige Umfang ist.

15. Verfahren nach einem der Ansprüche 11 bis 14, dadurch gekennzeichnet, daß die Nocken-Vorform relativ abgerundete Nockenspitzen aufweist und das Verfahren weiterhin einen Schritt eines Umformens der relativ abgerundeten Nockenspitzen in spitzere Nockenspitzen aufweist.

16. Verfahren nach einem der Ansprüche 9 bis 15, dadurch gekennzeichnet, daß das Nachbearbeiten der Nockenwelle durch ein oder mehrere Nachbehandlungsverfahren, ausgewählt aus der Gruppe bestehend aus Nitrocarburieren, Plasmanitrieren, Borieren, Läserhärten, Härten ohne Aufkohlen, Induktionshärten, Flammhärten, Elektronenstrahlhärten, Einsatzhärten, erfolgt.

## Claims

1. Process for producing hollow camshafts from a cold-formable, heat-treatable metal or a metal alloy or plastics material, with the grain running parallel to the outer contours of the camshaft, by means of the following steps:
[a] providing an initial tubular part and filling the latter with fluid;
[b] sealing at least the portion of tube to be widened out;
[c] applying an internal high pressure suitable for widening out the portion of tube with simultaneous upsetting of the initial tubular part in the direction of its longitudinal axis, so that material accumulates approximately at the points at which cams are to be produced;
characterized in that the intermediate product thus produced is further formed by means of the step of:
[d] forming of the intermediate product into a form corresponding to the final camshaft form by means of a further internal high pressure forming step.

2. Process according to Claim 1, characterized in that the wall thickness of the initial tubular part is between approximately 2 and 5 mm, preferably approximately 2.5 to 4 mm.

3. Process according to Claim 1 or 2, characterized in that in the intermediate form the cam preform is wider than the finished cam.

4. Process according to Claim 3, characterized in that the width of the cam preform is between 10% and 40%, and especially between 20% and 30% wider than the final form of the cams of the completed camshaft.

5. Process according to Claim 1 or 2, characterized in that in the intermediate form the cam preform has a greater circumference than the finished cam.

6. Process according to Claim 5, characterized in that the predetermined circumference of the cam preforms is between 5% and 20%, especially 10% greater than the final circumference.

7. Process according to one of Claims 3 to 6, characterized in that the cam preform has relatively rounded cam apexes and the process furthermore has a step for forming the relatively rounded cam apexes into more pointed cam apexes.

8. Process according to one of Claims 1 to 7, characterized in that the finishing of the camshaft is carried out by means of one or more after treatment processes, selected from the group consisting of nitro-carbonizing, plasma nitridizing, boronizing, laser hardening, hardening without casing, induction hardening, flame hardening, electron beam hardening and case hardening.

9. Process for producing hollow camshafts from a cold-formable, heat-treatable metal or a metal alloy or plastics material, with the grain running parallel to the outer contours of the camshaft, by means of the following steps:
[a] providing an initial tubular part and filling the latter with fluid;
[b] sealing at least the portion of tube to be widened out;
[c] applying an internal high pressure suitable for widening out the portion of tube with simultaneous upsetting of the initial tubular part in the direction of its longitudinal axis, so that material accumulates approximately at the points at which cams are to be produced;
characterized in that the intermediate product thus produced is further formed by means of the step of:
[d] a second forming of the intermediate product preform thus produced, into a form corresponding to the completed camshaft, by means of swaging or another suitable process.

10. Process according to Claim 9, characterized in that the wall thickness of the initial tubular part is between approximately 2 and 5 mm, preferably 2.5 to 4 mm.

11. Process according to Claim 9 or 10, characterized in that in the intermediate form the cam preform is wider than the finished cam.

12. Process according to Claim 11, characterized in that the width of the cam preform is between 10% and 40%, especially between 20% and 30% wider than the final form of the cams of the completed camshaft.

13. Process according to Claim 9 or 10, characterized in that in the intermediate form the cam preform has a greater circumference than the finished cam.

14. Process according to Claim 13, characterized in that the predetermined circumference of the cam preforms is between 5% and 20%, especially 10% greater than the final circumference.

15. Process according to one of Claims 11 to 14, characterized in that the cam preform has relatively rounded cam apexes and the process furthermore has a step for forming the relatively rounded cam apexes into more pointed cam apexes.

16. Process according to one of Claims 9 to 15, characterized in that the finishing of the camshaft is carried out by means of one or more after treatment processes, selected from the group consisting of nitrocarbonizing, plasma nitridizing, boronizing, laser hardening, hardening without casing, induction hardening, flame hardening, electron beam hardening and case hardening.

## Revendications

1. Procédé de fabrication d'arbres à cames creux conçus dans un métal pouvant être formé à froid et traité à chaud ou un alliage de métal ou un plastique, avec un fibrage parallèle aux contours extérieurs de l'arbre à cames, ledit procédé comprenant les étapes suivantes :
a) mise à disposition d'un élément tubulaire de départ et remplissage de ce dernier d'un fluide ;
b) obturation au moins du segment de tube à élargir ;
c) application d'une haute pression interne appropriée à l'élargissement du segment de tube, avec refoulement simultané de l'élément tubulaire de départ suivant son axe longitudinal si bien qu'il se produit des accumulations de matière à peu près aux endroits où les cames doivent se former,
caractérisé en ce que le produit intermédiaire ainsi réalisé est perfectionné par l'étape suivante
d) formage du produit intermédiaire dans un moule correspondant à la forme définitive de l'arbre à cames, par une autre étape de formage sous haute pression interne.

2. Procédé selon la revendication 1, caractérisé en ce que l'épaisseur de paroi de l'élément tubulaire de départ est comprise à peu près entre 2 et 5 mm, de préférence à peu près entre 2,5 et 4 mm.

3. Procédé selon la revendication 1 ou 2, caractérisé en ce que, dans sa forme intermédiaire, la préforme des cames est plus large que la came finie.

4. Procédé selon la revendication 3, caractérisé en ce que la largeur de la préforme des cames est de 10 à 40 %, en particulier de 20 à 30 % plus large que la forme définitive des cames de l'arbre à cames définitif.

5. Procédé selon la revendication 1 ou 2, caractérisé en ce que, dans sa forme intermédiaire, la préforme des cames présente un pourtour plus grand que celui de la came finie.

6. Procédé selon la revendication 5, caractérisé en ce que le pourtour prédéterminé des préformes des cames est de 5 à 20 %, en particulier de 10 % plus grand que le pourtour définitif.

7. Procédé selon l'une quelconque des revendications 3 à 6, caractérisé en ce que la préforme des cames présente des sommets de came relativement arrondis, et en ce que le procédé comprend en outre une étape de formage des sommets de came relativement arrondis en sommets de came plus pointus.

8. Procédé selon l'une quelconque des revendications 1 à 7, caractérisé en ce que la retouche de l'arbre à cames se fait par un ou plusieurs procédés de traitement complémentaire sélectionnés dans le groupe comportant la nitrocarburation, la nitruration par plasma, la boruration, le durcissement au laser, le durcissement sans carburation, la trempe par induction, la trempe à la flamme, le durcissement par faisceau électronique, la cémentation.

9. Procédé de fabrication d'arbres à cames creux conçus dans un métal pouvant être formé à froid et traité à chaud ou un alliage de métal ou un plastique, avec un fibrage parallèle aux contours extérieurs de l'arbre à cames, ledit procédé comprenant les étapes suivantes :
a) mise à disposition d'un élément tubulaire de départ et remplissage de ce dernier d'un fluide ;
b) obturation au moins du segment de tube à élargir ;
c) application d'une haute pression interne appropriée à l'élargissement du segment de tube, avec refoulement simultané de l'élément tubulaire de départ suivant son axe longitudinal si bien qu'il se produit des accumulations de matière à peu près aux endroits où les cames doivent se former,
caractérisé en ce que le produit intermédiaire ainsi réalisé est perfectionné par l'étape suivante :
d) second formage de la préforme ainsi fabriquée, ou produit intermédiaire, dans un moule correspondant à la forme définitive de l'arbre à cames, par le procédé du rétreint ou un autre procédé approprié.

10. Procédé selon la revendication 9, caractérisé en ce que l'épaisseur de paroi de l'élément tubulaire de départ est de 2 à 5 mm environ, de préférence de 2,5 à 4 mm environ.

11. Procédé selon la revendication 9 ou 10, caractérisé en ce que, dans sa forme intermédiaire, la préforme des cames est plus large que la came finie.

12. Procédé selon la revendication 11, caractérisé en ce que la largeur de la préforme des cames est de 10 à 40 %, en particulier de 20 à 30 % plus large que la forme finie des cames de l'arbre à cames définitif.

13. Procédé selon la revendication 9 ou 10, caractérisé en ce que dans sa forme intermédiaire, la préforme des cames présente un pourtour plus grand que celui de la came finie.

14. Procédé selon la revendication 13, caractérisé en ce que le pourtour prédéterminé des préformes des cames est de 5 à 20 %, en particulier de 10 % plus grand que le pourtour définitif.

15. Procédé selon l'une quelconque des revendications 11 à 14, caractérisé en ce que la préforme des cames présente des sommets de came relativement arrondis, et en ce que le procédé comprend en outre une étape de formage des sommets de came relativement arrondis en sommets de came plus pointus.

16. Procédé selon l'une quelconque des revendications 9 à 15, caractérisé en ce que la retouche de l'arbre à cames se fait par un ou plusieurs procédés de traitement complémentaire sélectionnés dans le groupe comportant la nitrocarburation, la nitruration par plasma, la boruration, le durcissement au laser, le durcissement sans carburation, la trempe par induction, la trempe à la flamme, le durcissement par faisceau électronique, la cémentation.
